# EUROPEAN PATENT APPLICATION

(11) **EP 1 270 213 A2**
(43) Date of publication of application: **02.01.2003**
(21) Application number: 02254278.1
(22) Date of filing: 19.06.2002
(51) Int. Cl.: B32B 31/18

(54) **Sheet lamination with angular separation of carrier**

(30) Priority: 25.06.2001 US 891591
(71) Applicant: Hewlett-Packard Company, Palo Alto, CA 94304 (US)
(72) Inventor: Ledak, Stephen M., Santee, CA 92071 (US)
(74) Representative: Jackson, Richard Eric

(57) **Abstract**

A method and apparatus for separating a laminate carrier (32) from a laminated media sheet (38) involves pulling the carrier away from the laminated sheet around a separator bar (80) having a sharp corner so that the separated carrier follows a path which makes an angle (α) of not less than about 85° with the laminated sheet from which the carrier has been removed. The corner preferably has a radius (R) no greater than about 0.50mm.

## Description

### Cross Reference to Related Applications

None.

### Background of the Invention

The present invention relates generally to the art of laminating sheets of media such as plain copy paper with a protective glossy surface coat and, more particularly, to separating the carrier layer which transports the lamination coat to the media sheet from the laminated media sheet. The surface of laminated sheets should have a smooth, glossy finish without imperfections. This is generally achieved by high pressure and high temperature application of the surface coat to the underlying media using heated rollers or the like with the resulting high cost when producing the high pressures and temperatures needed to achieve the desired result.

It is the primary objective of the present invention to improve the process of achieving acceptable smoothness of the lamination coat or finish on laminated media sheets and to provide less expensive apparatus for doing so.

### Summary of the Invention

The present invention therefore provides a method of removing a lamination coat carrier layer from a laminated sheet of media comprising the steps of:
a) feeding a carrier having a lamination coat removably adhered thereon to a lamination position;
b) moving a sheet of media to be laminated to said lamination position in surface to surface contact with said lamination coat;
c) continuing to move said media sheet and affixing said lamentation coat to said moving media sheet by application of pressure to said media and carrier; and
d) removing said carrier from said lamination coat on said media sheet by holding a portion of said carrier in contact with said media sheet and pulling said carrier away from said coated media sheet adjacent a point at which said carrier is held in contact with said sheet at an angle which is not less than about 85°.

The present invention further provides a method of removing a lamination coat carrier layer from a laminated sheet of media comprising the steps of:
a) feeding a carrier having a lamination coat removably adhered thereon to a lamination position;
b) moving a sheet of media to be laminated to said lamination position in surface to surface contact with said lamination coat;
c) continuing to move said media sheet and affixing said lamentation coat to said moving media sheet by application of pressure to said media and carrier; and
d) removing said carrier from said lamination coat on said media sheet by holding a portion of said carrier in contact with said media sheet and pulling said carrier away from said coated media sheet adjacent a point at which said carrier is held in contact with said sheet around a corner having a radius not exceeding about 0.50mm.

The present invention further provides apparatus for laminating a sheet of media comprising:
a) a support for sheets of media to be laminated;
b) a rotatable pair of opposed lamination rollers for applying pressure to and moving a media sheet and a carrier having a lamination coat thereon in surface to surface contact through a bight between said rollers;
c) a carrier separator for guiding movement of said carrier during removal of said layer from said laminated sheet, said separator having a first surface for holding said carrier in engagement with said laminated sheet and a second surface which intersects said first surface at an interior angle not more than about 95° ; and
d) means for pulling said carrier in engagement with said second surface from said laminated sheet.

The present invention further provides apparatus for laminating a sheet of media comprising:
a) a support for sheets of media to be laminated;
b) a rotatable pair of opposed lamination rollers for applying pressure to and moving a media sheet and a carrier having a lamination coat thereon in surface to surface contact through a bight between said rollers;
c) a carrier separator for guiding movement of said carrier during removal of said layer from said laminated sheet, said separator having a corner for holding said carrier in engagement with said laminated sheet, said corner having a radius not exceeding about 0.50mm; and
d) means for pulling said carrier in engagement with said corner away from said laminated sheet.

### Brief Description of the Drawings

Figure 1 is a schematic cross section view of a sheet lamination apparatus.

Figure 2 is an enlarged view of a carrier and removable lamination coat adhered thereon to be applied to a media sheet.

Figure 3 is a schematic view of various carrier separator configurations.

### Detailed Description of the Preferred Embodiment

Like elements are identified with like reference numerals in the following description and drawings.

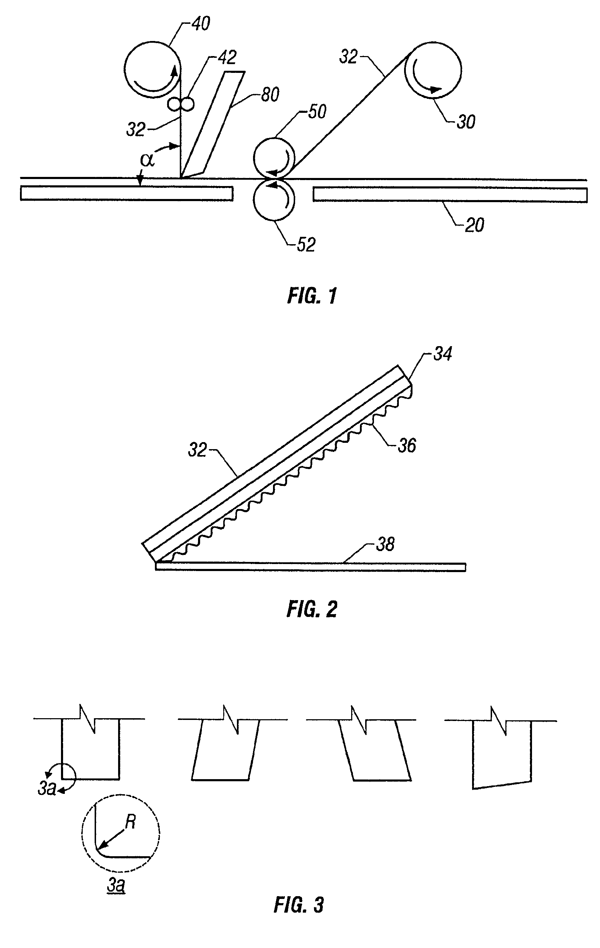

In the schematic representation of the sheet lamination apparatus seen in Fig. 1, the apparatus 10 includes a media feed tray or shelf 20 from which individual media sheets are transported by suitable sheet moving apparatus (not shown) to be received in a nip or bight between opposed lamination rollers 50, 52. Those skilled in the art will understand that opposed rollers may be replaced by equivalent means such as opposed belts therefore, in this disclosure and the claims, the terms "roller" and "rollers' are intended to broadly encompass ordinary rollers, plural coaxial wheels, moveable belts which are trained around rollers and other mechanical equivalents which perform the same function.

A lamination stock supply reel 30 holds a wound web of layered material comprising a carrier 32 having a lamination coat 34 removably adhered to the carrier layer and adhesive 36 for bonding the lamination material to individual media sheets 38. Typically, the carrier 32 and lamination material as well as adhesive 36 are a clear plastic sheet material which adheres due to the adhesive to the laminated sheet from which the carrier 32 is then removed and wound onto a take-up reel 40 after the media sheet 38 has been laminated. One or more guide rollers 42 may be provided to guide the removed carrier 32 to the take-up reel 40. One or both of the lamination rollers 50, 52 may be heated to simultaneously apply heat not exceeding about 160 ° C and pressure not exceeding about 4 lbs./sq. inch to the lamination web and media sheet 38 to bond the lamination coat 34 to the sheet 38.

Pursuant to the invention, a carrier separator bar 80, preferably of stainless steel sheet metal, is positioned downstream from the opposed lamination rollers 50, 52 and has an angular low radius edge or corner around which the carrier 32 is bent during removal of the carrier which is pulled by powered rotation of the take-up reel 40. It has been found that the corner should have a radius R not exceeding about 0.50mm and that the angle α at which the removed carrier 32 is pulled away from the media path of travel as it passes beneath the separator bar 80 should preferably be 90 ° or greater and not less than about 75° .

Various cross-sectional configurations such as those seen in Fig. 3 can be chosen for the separator bar 80 and a square bar 80 oriented such that its sides are parallel and perpendicular to the path of media travel is presently preferred.

Persons skilled in the art will also appreciate that various additional modifications can be made in the preferred embodiment shown and described above and that the scope of protection is limited only by the wording of the claims which follow.

## Claims

1. A method of removing a lamination coat carrier layer from a laminated sheet (38) of media comprising the steps of:
a) feeding a carrier (32) having a lamination coat (34) removably adhered thereon to a lamination position;
b) moving a sheet (38) of media to be laminated to said lamination position in surface to surface contact with said lamination coat;
c) continuing to move said media sheet and affixing said lamentation coat to said moving media sheet by application of pressure to said media and carrier; and
d) removing said carrier from said lamination coat on said media sheet by holding a portion of said carrier in contact with said media sheet and pulling said carrier away from said coated media sheet adjacent a point at which said carrier is held in contact with said sheet at an angle (α) which is not less than about 85° .

2. The method of claim 1, comprising holding said carrier in contact with said moving sheet in a first area and pulling said carrier away from said laminated sheet around a corner having a radius (R) not exceeding about 0.50mm.

3. The method of claim 2, wherein said first area is substantially flat.

4. The method of claim 3, comprising the step of using a rotating carrier take up roll (40) to pull said carrier away from said laminated sheet.

5. The method of claim 4, including applying lamination pressure not exceeding about 4 lbs./sq.in. to said carrier and said sheet.

6. The method of claim 5, further comprising the step of heating said media sheet and said lamination coat to a temperature not exceeding about 160° C during application of said pressure.

7. A method of removing a lamination coat carrier layer from a laminated sheet of media comprising the steps of:
a) feeding a carrier (32) having a lamination coat (34) removably adhered thereon to a lamination position;
b) moving a sheet (38) of media to be laminated to said lamination position in surface to surface contact with said lamination coat;
c) continuing to move said media sheet and affixing said lamentation coat to said moving media sheet by application of pressure to said media and carrier; and
d) removing said carrier from said lamination coat on said media sheet by holding a portion of said carrier in contact with said media sheet and pulling said carrier away from said coated media sheet adjacent a point at which said carrier is held in contact with said sheet around a corner having a radius (R) not exceeding about 0.50mm.

8. The method of claim 7, comprising holding said carrier in contact with said moving sheet in a first area and pulling said carrier away from said laminated sheet at an angle (α) not less than about 85 ° .

9. The method of claim 8, wherein said first area is substantially flat.

10. The method of claim 9, comprising the step of using a rotating carrier take up roll (40) to pull said carrier away from said laminated sheet.

11. The method of claim 10, including applying lamination pressure not exceeding about 4 lbs/sq.in. to said carrier and said sheet.

12. The method of claim 11, further comprising the step of heating said media sheet and said lamination coat to a temperature not exceeding about 160° C during application of said pressure.

13. Apparatus for laminating a sheet of media comprising:
a) a support (20) for sheets of media to be laminated;
b) a rotatable pair of opposed lamination rollers (50, 52) for applying pressure to and moving a media sheet and a carrier having a lamination coat thereon in surface to surface contact through a bight between said rollers;
c) a carrier separator (80) for guiding movement of said carrier during removal of said layer from said laminated sheet, said separator having a first surface for holding said carrier in engagement with said laminated sheet and a second surface which intersects said first surface at an interior angle not more than about 95° ; and
d) means (40) for pulling said carrier in engagement with said second surface from said laminated sheet.

14. The apparatus of claim 13, wherein said means for pulling said carrier comprises a rotatable carrier take up roll (40).

15. The apparatus of claim 13, wherein said wherein said surfaces define a corner having an interior radius (R) between said surfaces not exceeding about 0.50mm.

16. The apparatus of claim 15, wherein said separator (80) comprises a rectangular bar.

17. Apparatus for laminating a sheet of media comprising:
a) a support (20) for sheets of media to be laminated;
b) a rotatable pair of opposed lamination rollers (50, 52) for applying pressure to and moving a media sheet and a carrier having a lamination coat thereon in surface to surface contact through a bight between said rollers;
c) a carrier separator (80) for guiding movement of said carrier during removal of said layer from said laminated sheet, said separator having a corner for holding said carrier in engagement with said laminated sheet, said corner having a radius (R) not exceeding about 0.50mm; and
d) means (40) for pulling said carrier in engagement with said corner away from said laminated sheet.

18. The apparatus of claim 17, wherein said means for pulling said carrier comprises a rotatable carrier take up roll (40).

19. The apparatus of claim 17, wherein said wherein said separator (80) has a surface extending from said corner at an angle of not more than about 95 ° with respect to a surface of said separator proximate a direction of travel of a laminated media sheet.

20. The apparatus of claim 19, wherein said separator comprises a rectangular bar.
